(19) Europäisches Patentamt
European Patent Office
Office européen des brevets

(11) **EP 1 213 801 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
*H01S 3/02* *(2006.01)*

(21) Anmeldenummer: **01129075.6**

(22) Anmeldetag: **07.12.2001**

(54) **Laserverstärkersystem**

Laser system

Système laser

(84) Benannte Vertragsstaaten:
**AT BE CH CY DE DK ES FI FR GB GR IE IT LI LU MC NL PT SE TR**

(30) Priorität: **09.12.2000 DE 10061424**

(43) Veröffentlichungstag der Anmeldung:
**12.06.2002 Patentblatt 2002/24**

(73) Patentinhaber: **TRUMPF Laser GmbH + Co. KG**
**78713 Schramberg (DE)**

(72) Erfinder:
• **Huonker, Martin, Dr.**
**78658 Zimmern (DE)**
• **Voss, Andreas**
**78713 Schramberg (DE)**
• **Schmitz, Christian, Dr.**
**78655 Dunningen (DE)**

(74) Vertreter: **Hoeger, Stellrecht & Partner**
**Patentanwälte**
**Uhlandstrasse 14 c**
**70182 Stuttgart (DE)**

(56) Entgegenhaltungen:
**EP-A- 0 632 551          WO-A-00/64016**
**US-A- 5 796 766**

• **BROWN D C ET AL: "EFFICIENT CW END-PUMPED, END-COOLED ND:YVO4 DIODE-PUMPED LASER" 20. November 1997 (1997-11-20), APPLIED OPTICS, OPTICAL SOCIETY OF AMERICA,WASHINGTON, US, PAGE(S) 8611-8613 , XP000725230 ISSN: 0003-6935 * das ganze Dokument ***

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Laserverstärkersystem umfassend einen einander gegenüberliegende Flachseiten aufweisenden plattenförmig ausgebildeten Festkörper, der ein laseraktives Material umfaßt, ein den Festkörper durchsetzendes Laserstrahlungsfeld, ein das laseraktive Material pumpendes Pumpstrahlungsfeld, eine Kühleinrichtung, welche aus dem Festkörper über eine erste Flachseite Wärme mittels eines in dieser strömenden fluiden Kühlmediums aufnimmt, und einen auf der ersten Flachseite angeordneten Reflektor für das Laserstrahlungsfeld.

Ein derartiges Laserverstärkersystem ist aus der europäischen Patentanmeldung 0 632 551 bekannt.

US-A-5 796 766 offenbart ein Laserverstärkersystem mit einem plattenförmigen aktiven Medium, das auf einer Flachseite eine Reflektorschicht aufweist und im wesentlichen nur durch einen Träger an der zweiten Flachseite gehalten wird. WO-A-00/64 016 offenbart ein Laserverstärkersystem mit einem plattenförmigen aktiven Medium, das zwischen zwei als Kühleinrichtung fungierenden Trägern positioniert ist.

Bei einem derartigen Laserverstärkersystem erfolgt die Fixierung des Festkörpers über die erste, den Reflektor tragende Flachseite, wobei es problematisch ist, den Festkörper definiert derart ausgerichtet zu fixieren, daß möglichst optimale optische Verhältnisse für die Ausbreitung des Laserstrahlungsfeldes vorliegen.

Der Erfindung liegt daher die Aufgabe zugrunde, ein Laserverstärkersystem der gattungsgemäßen Art derart zu verbessern, daß sich der Festkörper möglichst optimal anordnen und ausrichten läßt.

Diese Aufgabe wird bei einem Laserverstärkersystem der eingangs beschriebenen Art erfindungsgemäß durch die Kombination der Merkmale von Anspruch 1 gelöst. Dabei ist ein von dem Laserstrahlungsfeld durchsetzter und für dieses transparenter formstabiler Träger für den Festkörper vorgesehen, so daß der Festkörper mit seiner zweiten Flachseite auf einer Trägerfläche des formstabilen Trägers flächig abgestützt ist und im wesentlichen nur über die mit der zweiten Flachseite zusammenwirkende Trägerfläche formdefiniert und positionsdefiniert angeordnet ist.

Der Vorteil der erfindungsgemäßen Lösung ist darin zu sehen, daß sich mit dieser Lösung die Kühlung von der qualitativ hochwertigen optischen Anordnung des Festkörpers relativ zum Laserstrahlungsfeld entkoppeln läßt, da die Kühlung über die zweite Flachseite erfolgt, genauso wie dies aus dem Stand der Technik bekannt ist, jedoch die qualitativ hochwertige optische Anordnung des Festkörpers über die zweite Flachseite erfolgt, welche durch die flächige Abstützung zu einer formdefinierten Anordnung und gleichzeitig einer positionsdefinierten Anordnung des Festkörpers führt, ohne daß dadurch für die Kühlung erforderliche Randbedingungen die Form und Position des Festkörpers beeinträchtigen oder sich auf diesen auswirken können.

Dabei ist außerdem ein großer Vorteil der erfindungsgemäßen Lösung darin zu sehen, daß durch die einseitige Vorgabe der Form und der Position des Festkörpers negative Beeinflussungen der optischen Eigenschaften des Festkörpers durch ungünstige mechanische Bedingungen vermieden werden können.

Eine besonders günstige Lösung sieht dabei vor, daß die erste Flachseite im vom Laserstrahlungsfeld durchsetzten Bereich frei von durch eine in sich mechanisch starre Fläche vorgegebenen Zwangskräften ist. Diese Lösung vermeidet es, insbesondere in dem vom Laserstrahlungsfeld durchsetzten Bereich des Festkörpers, mechanische Spannungen aufzubauen, die wiederum die optischen Eigenschaften des Festkörpers in dem vom Laserstrahlungsfeld durchsetzten Bereich negativ beeinträchtigen können.

Dies ist insbesondere deshalb von Bedeutung, da aufgrund der Aufheizung des Festkörpers durch das Pumpstrahlungsfeld eine Ausdehnung des Festkörpers erfolgt, die dann, wenn der Festkörper auf der ersten Flachseite von einer mechanisch starren Fläche vorgegebenen Zwangskräften unterworfen ist, zu einer Beeinträchtigung der optischen Eigenschaften des Festkörpers im vom Laserstrahlungsfeld durchsetzten Bereich führen.

Bei dem erfindungsgemäßen Laserverstärkersystem bestehen nun unterschiedliche Möglichkeiten, um sicherzustellen, daß Form und Position der zweiten Flachseite eindeutig durch die Trägerfläche des Trägers vorgegeben sind.

Ein vorteilhaftes Ausführungsbeispiel der erfindungsgemäßen Lösung sieht dabei vor, daß der Festkörper an dem Träger fixiert ist.

Hinsichtlich der Fixierung zwischen Festkörper und Träger sind unterschiedlichste Möglichkeiten denkbar. Beispielsweise ist es denkbar, den Festkörper randseitig an dem Träger zu fixieren.

Eine besonders günstige Lösung sieht vor, daß der Festkörper an dem Träger durch eine zwischen der Trägerfläche und der zweiten Flachseite wirksame Verbindung fixiert ist.

Eine derartige zwischen der Trägerfläche und der zweiten Flachseite wirksame Verbindung kann in unterschiedlichster Weise realisiert sein.

Eine besonders günstige Lösung sieht dabei vor, daß die Verbindung zwischen der Trägerfläche und der zweiten Flachseite durch Bonden von Träger und Festkörper entstanden ist, wobei unter Bonden von Träger und Festkörper das Herstellen einer mechanisch belastbaren starren Verbindung zwischen dem Festkörper und dem Träger zu verstehen ist.

Das Vorsehen einer Verbindung zwischen Festkörper und Träger durch Bonden hat den Vorteil, daß kein zusätzliches Material Verwendung findet, welches die optischen Eigenschaften der Einheit aus Träger und Festkörper negativ beeinträchtigen könnte.

Eine andere Lösung sieht vor, daß die Verbindung zwischen der Trägerfläche und der zweiten Flachseite durch eine Halteschicht erfolgt. Eine derartige Halteschicht hat zwar den Nachteil, daß diese gegebenenfalls zu einer Beeinträchtigung der optischen Eigenschaften der Einheit aus Träger und Festkörper führt, andererseits aber den Vorteil, daß sich die Verbindung zwischen Festkörper und Träger in einfacher Weise realisieren läßt.

Um die optischen Eigenschaften der Einheit aus Träger, Festkörper und diese verbindender Halteschicht zu optimieren, ist vorzugsweise vorgesehen, daß die Halteschicht hinsichtlich ihres Brechungsindex an den Brechungsindex des Festkörpers angepaßt ist.

Eine besonders günstige Lösung, die insbesondere Reflexionen im Bereich der Halteschicht vermeidet, sieht vor, daß zwischen der Halteschicht und dem Träger und/oder der Halteschicht und dem Festkörper jeweils ein Brechungsindexunterschied von weniger als $10^{-2}$ besteht.

Alternativ oder ergänzend zur Anpassung des Brechungsindex der Halteschicht an den Träger und/oder den Festkörper sieht eine weitere vorteilhafte Lösung vor, daß zwischen der Halteschicht und dem Träger eine Antireflexschicht vorgesehen ist.

Ferner ist es weiterhin vorteilhaft, wenn zwischen der Halteschicht und dem Festkörper eine Antireflexschicht vorgesehen ist.

Alternativ zum Vorsehen einer zwischen Festkörper und Träger direkt wirksamen Verbindung sieht ein weiteres vorteilhaftes Ausführungsbeispiel vor, daß der Festkörper und der Träger im Bereich der Trägerfläche und der zweiten Flachseite kraftschlüssig durch Druckbeaufschlagung des Festkörpers in Richtung des Trägers fixiert sind. Diese Lösung hat den Vorteil, daß damit die Probleme, die eventuell zu einer Beeinträchtigung der optischen Eigenschaften der Einheit aus Träger und Festkörper führen, vermieden werden können.

Eine besonders günstige Lösung sieht dabei vor, daß der Festkörper durch das Kühlmedium in Richtung des Trägers kraftbeaufschlagt ist, so daß der Druck im Kühlmedium selbst dazu ausgenutzt werden kann, die Kraft zu erzeugen, mit welcher eine kraftschlüssige Fixierung des Festkörpers an dem Träger erfolgt.

Alternativ dazu sieht eine andere Möglichkeit vor, daß der Festkörper in Teilbereichen in Richtung des Trägers kraftbeaufschlagt ist, so daß durch eine partielle Beaufschlagung des Festkörpers die Fixierung des Festkörpers am Träger durch Kraftschluß erfolgt.

Dies läßt sich beispielsweise dadurch lösen, daß der Festkörper in einem außerhalb des Laserstrahlungsfeldes liegenden äußeren Bereich in Richtung des Trägers kraftbeaufschlagt ist. In diesem Fall ist es beispielsweise möglich, den Festkörper an dem Träger durch ein mechanisches Klemmen in diesem äußeren Bereich zu fixieren, wobei dies den Vorteil hat, daß durch das Klemmen in dem äußeren Bereich des Festkörpers die optischen Eigenschaften desselben in dem vom Laserstrahlungsfeld durchsetzten Bereich nur in geringem Maße oder unwesentlich beeinträchtigt werden.

Hinsichtlich der zu erreichenden optischen Eigenschaften des Festkörpers ist es besonders günstig, wenn der Festkörper mit dem an das vom Laserstrahlungsfeld durchsetzte Teilvolumen angrenzenden Bereich der zweiten Flachseite in jedem Punkt mit im wesentlichen derselben Kraft auf den Träger wirkt, so daß aufgrund dieser im wesentlichen homogenen Kraftwirkung auch die auf den Festkörper wirkenden und somit gegebenenfalls dessen optische Eigenschaften beeinflussenden Kräfte keine Inhomogenitäten hinsichtlich der optischen Eigenschaften in dem vom Laserstrahlungsfeld durchsetzten Teilvolumen bewirken.

Eine andere Möglichkeit, den Festkörper definiert an die Trägerfläche anzulegen, sieht vor, daß der mit der zweiten Flachseite an der Trägerfläche anliegende Festkörper, zumindest mit dem an den vom Laserstrahlungsfeld durchsetzten Teilvolumen angrenzenden Bereich der zweiten Trägerfläche, aufgrund innerer Vorspannung auf den Träger wirkt. Dies ist durch unterschiedliche Lösungen realisierbar.

Beispielsweise wäre es denkbar, von einem Festkörper mit einer ebenen zweiten Flachseite auszugehen und die Trägerfläche konvex zu wölben, so daß beim Anlegen der ebenen Flachseite an die Trägerfläche die innere Vorspannung entsteht, mit welcher der Festkörper mit seinem an den vom Laserstrahlungsfeld durchsetzten Teilvolumen angrenzenden Bereich der Trägerfläche aufgrund der inneren Vorspannung an dem Träger anlegbar ist.

Eine andere Lösung sieht vor, daß die zweite Flachseite vor dem Anlegen derselben an der Trägerfläche eine konvexe Wölbung aufweist und ein Anlegen an eine im wesentlichen ebene oder eine geringere konvexe Wölbung aufweisende Trägerfläche erfolgt.

Hinsichtlich des Temperaturverlaufs in dem Festkörper wurden bislang keine näheren Angaben gemacht. So sieht eine besonders vorteilhafte Lösung vor, daß in den von dem Laserstrahlungsfeld durchsetzten Bereichen der ersten und zweiten Flachseite die Temperatur an der zweiten Flachseite höher ist als an der ersten Flachseite.

Besonders günstig ist es, wenn der Festkörper in dem vom Laserstrahlungsfeld durchsetzten Volumenbereich einen im wesentlichen ausschließlich quer zu den Flachseiten verlaufenden Temperaturgradient aufweist.

Ferner ist es auch zweckmäßig, insbesondere um das Ausbilden einer thermischen Linse zu vermeiden, wenn der Festkörper in dem vom Laserstrahlungsfeld durchsetzten Volumenbereich in Richtung einer Flächenausdehnung in Richtung der Flachseiten im wesentlichen temperaturgradientenfrei ist.

Außerdem ist vorzugsweise vorgesehen, daß in dem Festkörper in einer sich quer zu den Flachseiten erstreckenden und von der zweiten Flachseite zur ersten Flachseite verlaufenden Richtung ein insgesamt negativer Temperaturgradient auftritt.

Hinsichtlich der Ableitung der Wärme aus dem Festkörper wurden im Zusammenhang mit der bisherigen Erläuterung der einzelnen Ausführungsformen keine näheren Angaben gemacht. So ist vorzugsweise vorgesehen, daß die Ableitung der Wärme aus dem Festkörper über ein mindestens eine auf den Festkörper aufgetragene Schicht umfassendes Schichtsystem erfolgt.

Ein derartiges Schichtsystem könnte selbst nochmals indirekt gekühlt werden. Besonders günstig ist es, wenn das Schichtsystem auf einer der Flachseite gegenüberliegenden Seite unmittelbar von dem fluiden Kühlmedium beaufschlagt ist.

Um zu verhindern, daß das Schichtsystem aufgrund seiner mechanischen Eigenschaften das flächige Anlegen der zweiten Flachseite des Festkörpers an der Trägerfläche behindert oder dabei zu mechanischen Spannungen im Festkörper führt, ist vorzugsweise vorgesehen, daß die Abfuhr von Wärme aus dem Festkörper zu dem fluiden Kühlmedium ausschließlich über Schichten aus formflexiblen Materialien erfolgt.

Unter dem Begriff formflexible Materialien ist dabei zu verstehen, daß die Steifigkeit des Schichtsystems wesentlich kleiner als die Steifigkeit des Trägers und des Festkörpers sein sollte, um keine negativen Effekte zu erreichen.

Hinsichtlich der Wärmeleitfähigkeit ist es besonders günstig, wenn die Schichten, über welche die Abfuhr von Wärme aus dem Festkörper zum fluiden Kühlmedium erfolgt, insgesamt einen Wärmewiderstand von höchsten $8\,K \cdot mm^2/W$ aufweisen.

Hinsichtlich des Aufbaus des Schichtsystems sind die unterschiedlichsten Möglichkeiten denkbar.

Die einfachste Möglichkeit sieht vor, daß das Schichtsystem eine einzige Schicht aufweist, welche eine Reflektorschicht darstellt, die ihrerseits auf ihrer der ersten Flachseite abgewandten Rückseite unmittelbar vom Kühlmedium beaufschlagt ist.

Noch vorteilhafter ist es jedoch, wenn die Wärmeabfuhr durch die Kühleinrichtung über eine von einer Reflektorschicht getragene Deckschicht erfolgt, welche auf einer dem Festkörper abgewandten Seite von dem fluiden Kühlmedium beaufschlagt ist.

Diese Deckschicht ist vorzugsweise als Schutzschicht für die Reflektorschicht gegen Einwirkung des Kühlmediums ausgebildet.

Dabei kann die Deckschicht selbst die verschiedensten Eigenschaften haben. Besonders günstig ist es dabei, wenn über die Deckschicht keine formdefinierende Einwirkung auf den Festkörper erfolgt, d. h. die mechanischen Eigenschaften der Deckschicht keinerlei formdefinierenden Auswirkungen auf den Festkörper haben.

Vorzugsweise ist dabei die Deckschicht als flexible Schicht ausgebildet.

Um weitgehend die formdefinierende Einwirkung der Deckschicht auf den Festkörper zu vermeiden, ist vorzugsweise vorgesehen, daß die Deckschicht als sich an die Form des Festkörpers formadaptierende Schicht ausgebildet ist.

Eine andere bevorzugte Lösung sieht vor, daß das Schichtsystem eine Membran umfaßt, welche auf ihrer dem Festkörper abgewandten Seite von dem fluiden Kühlmedium beaufschlagt ist.

Mit einer derartigen Membran läßt sich besonders einfach ein Schutz des Festkörpers und des Reflektors erreichen.

Vorzugsweise liegt dabei-die--Membran auf einer dem Festkörper gegenüberliegenden Seite an der Reflektorschicht oder einer auf der Reflektorschicht aufgetragenen Deckschicht an.

Hinsichtlich einer möglichst optimalen Integration von Träger, Festkörper und Kühleinrichtung ist vorzugsweise vorgesehen, daß der Festkörper mit dem Schichtsystem eine das Kühlmedium führende Kammer begrenzt.

Dabei ist es denkbar, daß dies allein durch den Festkörper mit dem Schichtsystem erfolgt oder auch durch die Kombination des Festkörpers mit dem den Festkörper formdefiniert abstützenden Träger.

Eine weitere vorteilhafte Ausführung sieht insbesondere vor, daß eine Schicht des Schichtsystems die das Kühlmedium führende Kammer begrenzt.

Dies kann beispielsweise entweder die Deckschicht oder die Membran sein.

Ferner ist für eine möglichst vorteilhafte Integration der Anordnung des Festkörpers über den Träger und der Kühleinrichtung vorgesehen, daß die Kühlkammer für das Kühlmedium in einem Haltergehäuse eines Halters für den Träger vorgesehen ist, so daß die Halterung des Trägers gleichzeitig auch als Kühleinrichtung wirkt.

Eine besonders günstige Lösung sieht vor, daß der Träger mit dem Festkörper eine Öffnung im Haltergehäuse verschließt, wobei sich von der Öffnung ausgehend eine Ausnehmung erstreckt, welche die Kühlkammer bildet.

Hinsichtlich der Ausbildung des Materials des Trägers wurden bislang keine näheren Angaben gemacht. Der Träger dient primär nicht dazu, den Festkörper zu kühlen. Dennoch ist vorzugsweise, insbesondere zum guten Temperaturausgleich auf seiten des Trägers, vorgesehen, daß der Träger aus einem Material mit einer Wärmeleitfähigkeit kleiner $2\,W/(m \cdot K)$ ausgebildet ist.

Eine weitere vorteilhafte Lösung sieht vor, daß der Träger aus einem athermalen optischen Material gebildet ist, das heißt einem Material, bei welchem sich die optischen Eigenschaften durch Temperaturänderungen oder Temperaturgradienten im wesentlichen nicht ändern, da sich mit der Temperatur und der Geometrie sich der Berechnungsindex so ändert, daß die optischen Eigenschaften im wesentlichen nicht geändert werden.

Da es im Rahmen der erfindungsgemäßen Lösung unerwünscht ist, über den Träger den Festkörper zu kühlen, ist vorzugsweise vorgesehen, daß der Träger gegenüber der Kühleinrichtung im wesentlichen thermisch isoliert ist.

Dies läßt sich beispielsweise durch isolierende Distanzstücke oder eine Isolierschicht erreichen.

Hinsichtlich der Struktur von Träger und Festkörper wurden bislang keine näheren Angaben gemacht. So sieht ein vorteilhaftes Ausführungsbeispiel vor, daß der Träger und der Festkörper ähnliche kristallgitterbildende Materialien aufweisen, so daß deren thermische Ausdehnung möglichst ähnlich ist und somit beim Aufheizen des Festkörpers keine stark unterschiedliche Wärmeausdehnung relativ zum Träger auftritt.

Hinsichtlich der möglichst guten optischen Eigenschaften des Festkörpers ist vorzugsweise vorgesehen, daß die Flachseiten des Festkörpers planparallel poliert sind, so daß dadurch keine negative Beeinflussung des Laserstrahlungsfeldes beim Durchtritt durch die Flachseiten resultiert.

Alternativ dazu ist vorzugsweise vorgesehen, daß der Träger und der Festkörper im Bereich der zweiten Flachseite und der Trägerfläche miteinander verbunden sind und die erste Flachseite und eine der Trägerfläche gegenüberliegende Frontfläche des Trägers planparallel zueinander poliert sind, so daß in diesem Fall die Einheit aus Träger und Festkörper zwei planparallele Flächen aufweist, die für eine gute Strahlqualität des Laserstrahlungsfeldes vorteilhaft sind.

Der Träger könnte bei einer Ausführungsform auch noch Beiträge zur Laserverstärkerfunktion liefern, wobei diese Funktionsbeiträge von denen des laseraktiven Mediums dominiert sind.

Beispielsweise könnte das Material des Trägers geringe Verstärkungseigenschaften für das Laserstrahlungsfeld aufweisen.

Generell sind die Funktionsbeiträge des Trägers so, daß der durch diese bedingte Wärmeeintrag weniger als ungefähr 10%, noch besser weniger als ungefähr 5%, des Wärmeeintrags im laseraktiven Medium beträgt. Weitere Merkmale und Vorteile der Erfindung sind Gegenstand der nachfolgenden Beschreibung sowie der zeichnerischen Darstellung einiger Ausführungsbeispiele. In der Zeichnung zeigen:

Fig. 1      einen Längsschnitt durch ein erstes Ausführungsbeispiel eines erfindungsgemäßen Laserverstärkersystems;

Fig. 2      eine vergrößerte ausschnittsweise Darstellung des Bereichs A in Fig. 1;

Fig. 3      eine nochmals vergrößerte Darstellung des Schnitts ähnlich Fig. 2 durch einen Festkörper des erfindungsgemäßen Laserverstärkersystems mit Darstellung von Isothermen;

Fig. 4      einen Schnitt ähnlich Fig. 2 durch ein zweites Ausführungsbeispiel;

Fig. 5      einen Schnitt ähnlich Fig. 2 durch ein drittes Ausführungsbeispiel;

Fig. 6      einen Schnitt ähnlich Fig. 1 durch ein viertes Ausführungsbeispiel;

Fig. 7      einen Schnitt ähnlich Fig. 1 durch ein fünftes Ausführungsbeispiel;

Fig. 8      einen Schnitt ähnlich Fig. 1 durch ein sechstes Ausführungsbeispiel;

Fig. 9      einen Schnitt ähnlich Fig. 1 durch ein siebtes Ausführungsbeispiel;

Fig. 10      einen Schnitt ähnlich Fig. 1 durch ein achtes Ausführungsbeispiel und

Fig. 11      einen Schnitt ähnlich Fig. 1 durch ein neuntes Ausführungsbeispiel.

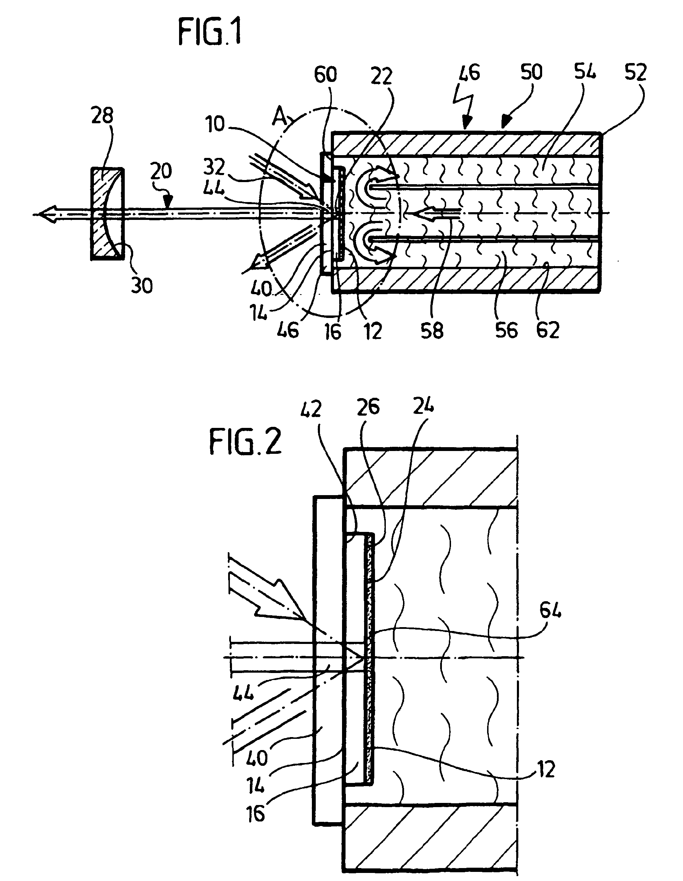

Ein erstes Ausführungsbeispiel eines erfindungsgemäßen Laserverstärkersystems, dargestellt in Fig. 1, umfaßt einen als Ganzes mit 10 bezeichneten plattenförmig ausgebildeten Festkörper, mit einer ersten Flachseite 12, mit einer dieser gegenüberliegenden zweiten Flachseite 14 und mit einer sich zwischen den einander gegenüberliegenden Flachseiten 12 und 14 erstreckenden Schmalseite 16.

Der Festkörper 10 umfaßt seinerseits ein laseraktives Material, ist also beispielsweise mit einem laseraktiven Material dotiert.

Der Festkörper weist ein von einem Laserstrahlungsfeld 20 durchsetztes Teilvolumen 22 auf, wobei das Laserstrahlungsfeld 20 beispielsweise durch einen zwei Reflektoren umfassenden Resonator definiert ist.

Es ist aber auch im Rahmen der erfindungsgemäßen Lösung denkbar, das Laserverstärkersystem ohne Resonator zu betreiben.

Ein erster Reflektor 24 ist, wie in Fig. 2 dargestellt, auf der ersten Flachseite 12 des Festkörpers 10 angeordnet, beispielsweise in Form einer Beschichtung 26 unmittelbar auf die erste Flachseite 12 aufgetragen.

Ein zweiter Reflektor 28 wird durch einen externen Spiegel 30 gebildet, welcher auf einer der ersten Flachseite 12 gegenüberliegenden Seite des Festkörpers 10 angeordnet und der zweiten Flachseite 14 zugewandt ist, wobei beispielsweise der externe Spiegel 30 als das Laserstrahlungsfeld 20 formender, insbesondere konkaver Spiegel ausgebildet ist.

Die Anregung des laseraktiven Materials des Festkörpers, zumindest innerhalb des Teilvolumens 22, erfolgt durch ein Pumpstrahlungsfeld 32, welches beispielsweise gegenüber dem Laserstrahlungsfeld 20 in einem spitzen Winkel geneigt in das Teilvolumen 22 einfällt und vorzugsweise ebenfalls von dem ersten Reflektor 24 reflektiert wird, um somit einen Mehrfachdurchgang des Pumpstrahlungsfeldes 32 durch das Teilvolumen 22 zu erreichen.

Das Grundkonzept eines derartigen Laserverstärkersystems ist beispielsweise in der europäischen Patentanmeldung 0 632 551 beschrieben, so daß hinsichtlich der Materialien für den Festkörper und des laseraktiven Materials sowie der besonderen Bedingungen zum Betreiben eines derartigen Lasers auf die Angaben in dieser Druckschrift vollinhaltlich Bezug genommen wird.

Da der Festkörper 10 bei dem erfindungsgemäßen Laserverstärkersystem mechanisch labil ist, ist ein formstabiler Träger 40 vorgesehen, welcher eine Trägerfläche 42 aufweist, an welcher der Festkörper 10 mit seiner zweiten Flachseite flächig abgestützt ist.

Dabei ist der Träger 40 in einem Volumenbereich 44 von dem Laserstrahlungsfeld 20 durchsetzt und zumindest in diesem Volumenbereich, vorzugsweise insgesamt, aus einem für das Laserstrahlungsfeld 20 und gegebenenfalls auch das Pumpstrahlungsfeld 32 transparenten Material ausgebildet.

Durch die flächige Abstützung des Festkörpers mit seiner zweiten Flachseite 14 an der Trägerfläche 42 wird der Festkörper durch den Träger 40 einerseits formdefiniert und andererseits positionsdefiniert in dem Laserstrahlungsfeld 20 gehalten, wobei der Träger 40 seinerseits über eine Halteeinrichtung 46 relativ zum zweiten Reflektor 28 fest positionierbar ist, so daß dadurch nicht nur der Festkörper 10, sondern auch der erste Reflektor 24 in definierter Position relativ zum zweiten Reflektor 28 angeordnet sind.

Die Halteeinrichtung 46 umfaßt ihrerseits eine als Ganzes mit 50 bezeichnete Kühleinrichtung, welche beispielsweise eine in einem Haltergehäuse 52 angeordnete Kühlkammer 54 umfaßt, in welcher ein fluides Kühlmedium 56 angeordnet ist, welches vorzugsweise die Kühlkammer 54 mit einem vorgegebenen Strömungsverlauf 58 durchströmt.

Zweckmäßigerweise ist dabei das Haltergehäuse 52 so ausgebildet, daß sich ausgehend von einer Öffnung 60 des Haltergehäuses 52 eine Ausnehmung 62 in dieses hineinerstreckt und die Kühlkammer 54 bildet, wobei die Öffnung 60 durch den Träger 40 verschlossen ist, welcher in einem äußeren Randbereich mit dem Haltergehäuse 52 verbunden ist und somit die Öffnung 60 verschließt, wobei der fest gegenüber dem Träger 40 angeordnete Festkörper 10 innerhalb der Öffnung 60 und auf einer dem Kühlmedium 56 zugewandten Seite des Trägers 40 liegt und somit unmittelbar durch das Kühlmedium 56 in der Kühlkammer 54 kühlbar ist.

Vorzugsweise ist hierzu, wie in Fig. 2 dargestellt, die den ersten Reflektor 24 bildende Beschichtung 26 noch mit einer Deckschicht 64 versehen, welche auf einer der ersten Flachseite 12 abgewandten Seite der Beschichtung 26 angeordnet ist und diese gegen die Einwirkung des Kühlmediums 56, insbesondere gegen mechanische und chemische Wechselwirkungen mit dem Kühlmedium 56, schützt.

Vorzugsweise ist dabei der Strömungsverlauf 58 in der Kühlkammer 54 so ausgebildet, daß das Kühlmedium 56 die Deckschicht 64 unmittelbar anströmt und durch diese umgelenkt wird, so daß im Bereich der Deckschicht 64 eine möglichst optimale Wärmeabfuhr durch das Kühlmedium 56 möglich ist.

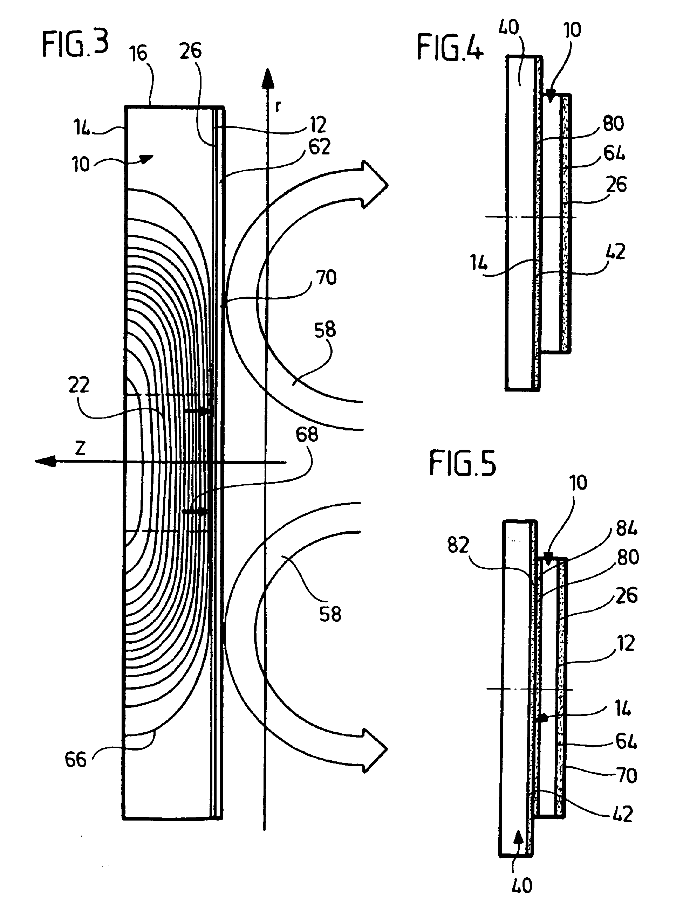

Somit bildet sich, wie in Fig. 3 dargestellt, in dem Festkörper 10 ein Temperaturverlauf aus, bei welchem die sich ausbildenden Isothermen 66 innerhalb des Teilvolumens 22, welches vom Laserstrahlungsfeld 20 durchsetzt ist, im wesentlichen parallel zu den Flachseiten 12 und 14 verlaufen und somit ein Temperaturgradient 68 im wesentlichen senkrecht zu den Flachseiten 12 und 14 verläuft, so daß eine Abfuhr der durch das Pumpstrahlungsfeld 32 in dem Festkörper 10 erzeugten Wärme quer durch die Beschichtung 26 und quer durch die Deckschicht 64, vorzugsweise in einer im wesentlichen zu der Flachseite 12 senkrechten Richtung, erfolgt und auf einer der Beschichtung 26 abgewandten Rückseite 70 der Deckschicht 64 die Wärme an das die Rückseite 70 abströmende Kühlmedium 56 abgegeben wird, das diese dann abführt.

Im Zusammenhang mit dem ersten Ausführungsbeispiel wurde dabei noch nicht näher auf die Verbindung zwischen dem Festkörper 10 und dem Träger 40 eingegangen.

Wie in Fig. 2 dargestellt, liegt die zweite Flachseite 14 unmittelbar auf der Trägerfläche 42 auf, und in diesem Fall ist vorzugsweise eine Verbindung zwischen dem Träger 40 und dem Festkörper 10 durch sogenanntes Bonden geschaffen, d. h. durch eine mechanisch belastbare, starre Verbindung zwischen zwei Festkörpern ohne Bildung einer Zwischenschicht. Beispielsweise ist eine Möglichkeit, eines derartigen Bondens in dem Artikel von "H.C.LEE, P.L. BROWNLIE, H.E. MEISSNER AND E.C. REA: Diffusion bonded composites of YAG single crystals. SPIE Proceedings on Laser-Induced Damage in Optical Materials, Oct.-Nov. 1991, Boulder CO, 1624, S.2-12 (1991)" beschrieben.

Bei einem zweiten Ausführungsbeispiel eines erfindungsgemäßen Lasersystems, dargestellt in Fig. 4, sind der Träger 40 und der Festkörper 10 durch eine als Ganzes mit 80 bezeichnete Halteschicht verbunden, die zwischen der Trägerfläche 42 und der zweiten Flachseite 14 wirksam ist, wobei die Halteschicht 80 nicht nur für das Laserstrahlungsfeld 20 und gegebenenfalls auch das Pumpstrahlungsfeld 32 transparent ist, sondern außerdem einen Brechungsindex $n_{80}$ aufweist, der so gewählt ist, daß ein Brechungsindexunterschied zwischen einem Brechungsindex $n_{40}$ des Materials des Trägers 40 und dem Brechungsindex $n_{80}$ der Halteschicht 80 sowie ein Brechungsindexunterschied zwischen dem Brechungsindex $n_{10}$ des Festkörpers 10 und dem Brechungsindex $n_{80}$ der Halteschicht 80 jeweils kleiner als $10^{-2}$ ist, um möglichst geringe Reflexionen an der Halteschicht 80 zu erhalten.

Bei einem dritten Ausführungsbeispiel, dargestellt in Fig. 5, ist zur Reduzierung von Reflexionen an der Halteschicht 80 vorzugsweise zwischen der Halteschicht 80 und dem Träger 40 eine Antireflexschicht 82 vorgesehen und zwischen der Halteschicht 80 und dem Festkörper 10 eine Antireflexschicht 84, wobei beide Antireflexschichten 82 und 84 eine optimale Anpassung an das Material der Halteschicht 80 erlauben.

Sowohl beim zweiten als auch beim dritten Ausführungsbeispiel ist somit der Festkörper 10 nicht unmittelbar flächig auf der Trägerfläche 42 abgestützt, sondern beim zweiten Ausführungsbeispiel lediglich mittelbar über die Halteschicht 80 und beim dritten Ausführungsbeispiel mittelbar über die Antireflexschichten 82 und 84 und die dazwischenliegende Halteschicht 80.

Im übrigen sind das zweite und dritte Ausführungsbeispiel mit dem ersten Ausführungsbeispiel identisch, so daß hinsichtlich der übrigen Merkmale vollinhaltlich auf die Ausführungen zum ersten Ausführungsbeispiel Bezug genommen werden kann.

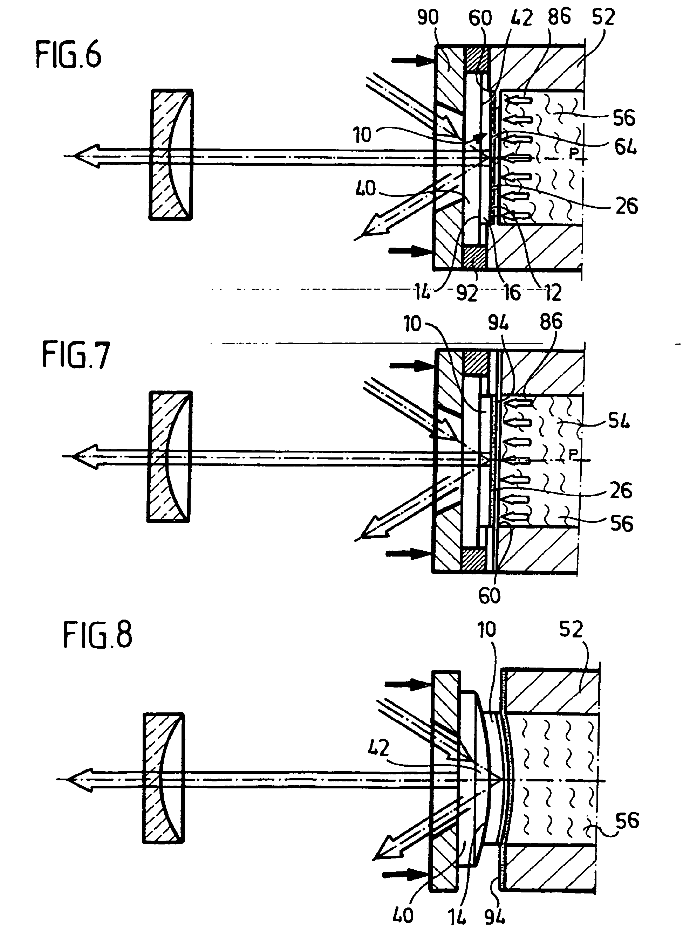

Bei einem vierten Ausführungsbeispiel, dargestellt in Fig. 6, sind diejenigen Elemente, die mit denen der voranstehenden Ausführungsbeispiele identisch sind, mit denselben Bezugszeichen versehen, so daß hinsichtlich der Beschreibung derselben vollinhaltlich auf die vorangehenden Ausführungsbeispiele Bezug genommen werden kann.

Im Gegensatz zu den ersten drei Ausführungsbeispielen ist beim vierten Ausführungsbeispiel der Festkörper 10 mit seiner zweiten Flachseite 14 lediglich an der Trägerfläche 42 angelegt, jedoch nicht mittelbar oder unmittelbar durch ein zwischen dem Festkörper 10 und dem Träger 40 wirksames Mittel fest mit dieser verbunden.

Vielmehr erfährt der Festkörper 10 von seiten des unter Druck stehenden Kühlmediums 26 eine Druckbeaufschlagung in einer Richtung 86, die zur Trägerfläche 42 hin weist und im wesentlichen senkrecht zur Trägerfläche 42 steht, so daß das unter Druck stehende Kühlmedium 56 auch dazu eingesetzt wird, die zweite Flachseite 14 flächig an der Trägerfläche 42 anzulegen und somit an dem Träger 40 abzustützen und somit den Festkörper aufgrund der mit der Trägerfläche 42 zusammenwirkenden zweiten Flachseite 14 formdefiniert und positionsdefiniert zu halten.

Besonders günstig läßt sich dies bei dem vierten, in Fig. 6 dargestellten Ausführungsbeispiel dadurch realisieren, daß der Träger 40 die Öffnung 60 des Haltergehäuses 52 dichtend abschließt, beispielsweise durch einen dichten Abschluß zwischen einem äußeren umlaufenden Randbereich und dem Haltergehäuse 52, beispielsweise einem um die Öffnung 60 herum verlaufenden Bereich desselben, wie dies in Fig. 6 dargestellt ist.

Beispielsweise ist der Träger 40 nicht unmittelbar an dem Haltergehäuse 52 gehalten, sondern der Träger 40 wird seinerseits durch einen Haltering 90 gehalten und dieser wird außerdem über thermisch isolierende Zwischenstücke 92 an dem Haltergehäuse 52 abgestützt, so daß über den Träger 40 aufgrund der thermischen Isolierung gegenüber dem Haltergehäuse 52 im wesentlichen keinerlei Kühlung des Festkörpers 10 erfolgen kann.

Es ist aber auch denkbar, den Haltering 90 durch eine nicht dargestellte Spannvorrichtung zu beaufschlagen, welche eine durch die Pfeile in Fig. 6 dargestellte Kraft in Richtung des Haltergehäuses 52 erzeugt.

Bei einem fünften Ausführungsbeispiel, dargestellt in Fig. 7, sind diejenigen Elemente, die mit denen des vierten Ausführungsbeispiels identisch sind, mit denselben Bezugszeichen versehen, so daß hinsichtlich der Beschreibung derselben vollinhaltlich auf das vierte Ausführungsbeispiel sowie die vorangehenden Ausführungsbeispiele Bezug genommen werden kann.

Das fünfte Ausführungsbeispiel basiert auf dem Prinzip des vierten Ausführungsbeispiels, allerdings ist die Kühlkammer 54 durch eine Membran 94 im Bereich ihrer Öffnung 60 abgeschlossen, und diese Membran 94 wirkt nun ihrerseits auf den Festkörper 10, wobei in diesem Fall die Beschichtung 26, welche den ersten Reflektor 24 darstellt, nicht zusätzlich mit der Deckschicht 64 versehen zu sein braucht, jedoch mit der Deckschicht 64 ebenfalls versehen sein kann.

Die Membran 94 ist dabei aus einem Material hergestellt, welches es erlaubt, daß sich die Membran 94 flächig an dem Festkörper 10, d. h. beispielsweise an der Beschichtung 26, anlegt und den Festkörper 10 flächig in Richtung der Trägerfläche 42 beaufschlagt, so daß in gleicher Weise wie im Zusammenhang mit dem vierten Ausführungsbeispiel beschrieben, durch den Träger 40 mit der Trägerfläche 42 der Festkörper formdefiniert und positionsdefiniert gehalten ist.

Der Vorteil der Membran 94 beim fünften Ausführungsbeispiel ist darin zu sehen, daß diese die Abdichtung der Kühlkammer 54 gegen ein Ausströmen des Kühlmediums 56 in einfacher Weise gewährleistet und somit das Kühlmedium 56 mit entsprechend großem Druck auf den Festkörper 10 einwirken kann.

Bei einem sechsten Ausführungsbeispiel, dargestellt in Fig. 8, erfolgt die Positionierung des Festkörpers 10 in gleicher Weise wie beim fünften Ausführungsbeispiel, allerdings mit dem Unterschied, daß in diesem Fall die Trägerfläche 42 des Trägers 40 als konvexe Fläche ausgebildet ist und somit der Festkörper 10 mit einer entsprechend konkav geformten zweiten Flachseite 14 an dem Träger 40 in Anlage gehalten wird.

Auch bei dem sechsten Ausführungsbeispiel wird der Festkörper 10 lediglich durch Druckbeaufschlagung seitens des Kühlmediums 56, welches auf die Membran 94 wirkt, in Anlage an der konvexen Trägerfläche 42 des Trägers 40 gehalten.

Aufgrund der Formbarkeit der Membran 94 legt sich diese an die durch die konkave Ausbildung der zweiten Flachseite 14 entsprechende konvexe Form der ersten Flachseite 12 vollflächig an.

Im übrigen wird insoweit als die Teile mit denen voranstehender Ausführungsbeispiele identisch sind, auf diese Ausführungsbeispiele Bezug genommen.

Der Vorteil des vierten, fünften und sechsten Ausführungsbeispiels ist somit darin zu sehen, daß das unter Druck stehende Kühlmedium 56 auf den Festkörper 10 im wesentlichen über dessen gesamte erste Flachseite 12 mit einer konstanten Druckkraft in Richtung der Trägerfläche 42 einwirkt und somit die Möglichkeit besteht, den Festkörper 10 mit einer im wesentlichen gleichmäßigen Druckkraft an der Trägerfläche 42 in Anlage zu halten, wobei entweder wie beim ersten Ausführungsbeispiel die zweite Flachseite unmittelbar an der Trägerfläche 42 abgestützt sein kann oder mittelbar durch gegebenenfalls zwischen dem Träger 40 und dem Festkörper 10 angeordnete Antireflexschichten.

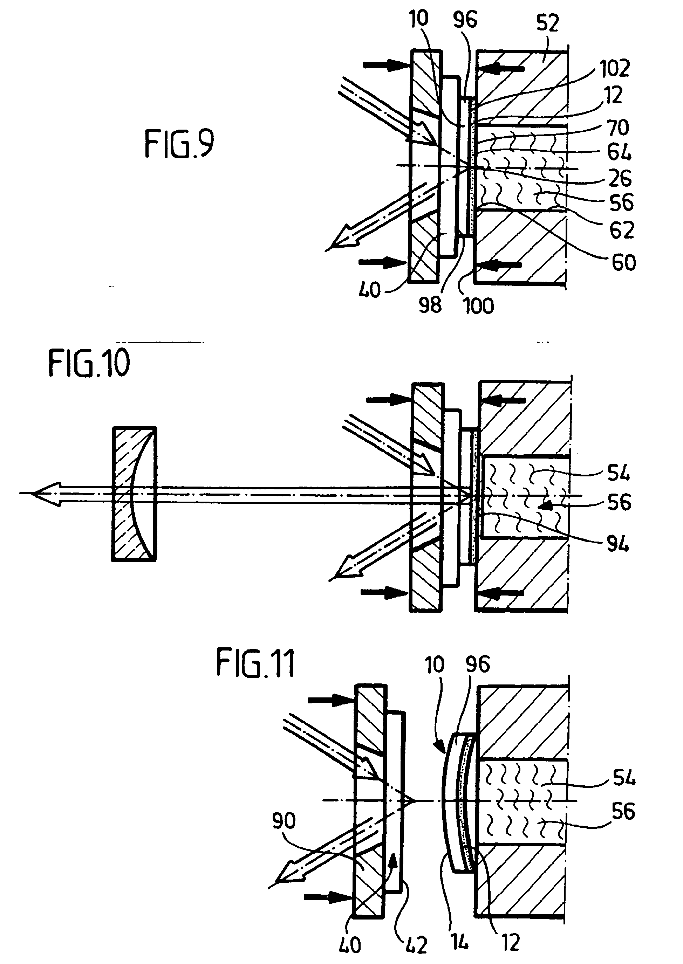

Bei einem siebten Ausführungsbeispiel, dargestellt in Fig. 9, sind diejenigen Teile, die mit denen der voranstehenden Ausführungsbeispiele identisch sind, mit denselben Bezugszeichen versehen, so daß hinsichtlich der Beschreibung derselben auf die voranstehenden Ausführungsbeispiele vollinhaltlich Bezug genommen werden kann.

Im Gegensatz zu den vorangehenden Ausführungsbeispielen wird bei dem siebten Ausführungsbeispiel der Festkörper 10 in einem äußeren Bereich 96 zwischen einem äußeren Bereich 98 der Trägerfläche 42 und einer Spannfläche 100, beispielsweise einer Stirnfläche des Haltergehäuses 52, eingeklemmt, wobei die Spannfläche 100 auf einen äußeren Bereich 102 der ersten Flachseite 12 mittelbar oder unmittelbar einwirkt. Bei einer mittelbaren Einwirkung ist die gesamte erste Flachseite mit der Beschichtung 26 und gegebenenfalls der Deckschicht 64 versehen, während bei einer unmittelbaren Einwirkung sich die Beschichtung 26 und die Deckschicht 64 nicht in den äußeren Bereich 102 der ersten Flachseite 12 erstrecken.

Ferner deckt bei dem siebten Ausführungsbeispiel der Festkörper 10 die Öffnung 60 der die Kühlkammer 54 aufnehmenden Ausnehmung 62 ab und dient somit zur Abdichtung der Kühlkammer 54 im Bereich der Öffnung 60, so daß das Kühlmedium 56 unmittelbar die Rückseite 70 der Deckschicht 64 anströmt, um die Wärme in der im Zusammenhang mit den voranstehenden Ausführungsbeispielen beschriebenen Art und Weise abzuführen.

Durch das Einspannen des Festkörpers 10 zwischen der Spannfläche 100 und dem äußeren Bereich 98 der Trägerfläche 42 wird der Festkörper 10 mit der zweiten Flachseite 14 an der gesamten Trägerfläche 42 angelegt.

Allerdings ist die Kraft, mit welcher die zweite Flachseite 14 im Bereich des Teilvolumens 22 an der Trägerfläche 42 im Bereich des Volumenbereichs 44 anliegt, geringer als die Kraft, mit welcher die zweite Flachseite 14 im äußeren Bereich 96 an dem äußeren Bereich 98 der Trägerfläche 42 anliegt.

Bei einem achten Ausführungsbeispiel, dargestellt in Fig. 10, sind diejenigen Elemente, die mit denen der voranstehenden Ausführungsbeispiele identisch sind, mit denselben Bezugszeichen versehen, so daß vollinhaltlich auf die Ausführungen zu diesen Ausführungsbeispielen Bezug genommen wird.

Das achte Ausführungsbeispiel gemäß Fig. 10 basiert auf dem Grundprinzip des siebten Ausführungsbeispiels, wobei allerdings beim achten Ausführungsbeispiel der Festkörper 10 nicht die Öffnung 60 verschließt und somit die Kühlkammer 54 mit dem darin vorgesehenen fluiden Kühlmedium 56 dichtend abschließt, sondern zusätzlich zum Verschließen der Kühlkammer 54 die Membran 94, die bereits im Zusammenhang mit dem fünften Ausführungsbeispiel erläutert wurde, eingesetzt ist.

Die Membran 94 erlaubt somit, daß zusätzlich noch der Druck des Kühlmediums 56 über die Membran 94 auf den Festkörper 10 einwirkt, um diesen gegen die Trägerfläche 42 anzulegen.

Bei einem neunten Ausführungsbeispiel, dargestellt in Fig. 11, findet dasselbe Prinzip Verwendung wie beim siebten Ausführungsbeispiel gemäß Fig. 9, allerdings mit dem Unterschied, daß der Festkörper 10 eine gewölbte Grundform mit einer konvexen zweiten Flachseite 14 aufweist, so daß beim Anpressen des Festkörpers 10 durch Beaufschlagen desselben in seinem äußeren Bereich 96 der Festkörper 10 selbst im wesentlichen über die gesamte zweite Flachseite 14 mit im wesentlichen derselben Kraft an der Trägerfläche 42 anliegt, da der Festkörper 10 aufgrund seiner zu der konvexen zweiten Flachseite 14 führenden gewölbten Grundform beim Anpressen gegen die ebene Trägerfläche 42 und somit der dadurch erforderlichen Deformation der Grundform des Festkörpers 10 dergestalt, daß die in der Grundform konvexe zweite Flachseite 14 vollflächig an die ebene Trägerfläche 42 angedrückt wird, innere Spannungen erzeugt, welche für eine im wesentlichen gleichmäßige Anpreßkraft der zweiten Flachseite 14 an der Trägerfläche 42 sorgen.

**Patentansprüche**

1.  Laserverstärkersystem umfassend

    einen einander gegenüberliegende Flachseiten (12, 14) aufweisenden, plattenförmig ausgebildeten Festkörper (10), der ein laseraktives Material umfasst,
    ein auf einer ersten Flachseite (12) angeordnetes Schichtsystem (26, 64, 94) umfassend eine Reflektorschicht (26) für das Laserstrahlungsfeld (20) und eine auf der Reflektorschicht (26) angeordnete Deckschicht (64),
    ein den Festkörper (10) durchsetzendes Laserstrahlungsfeld (20),
    ein das laseraktive Material pumpendes Pumpstrahlungsfeld (32),
    einen von dem Laserstrahlungsfeld (20) durchsetzten und für dieses transparenter formstabiler Träger (40) für den Festkörper (10), wobei der Festkörper (10) mit seiner zweiten Flachseite (14) auf einer Trägerfläche (42) des formstabilen Trägers (40) flächig abgestützt ist, über die im wesentlichen nur mit der zweiten Flachseite (14) zusammenwirkende Trägerfläche (42) formdefiniert und positionsdefiniert angeordnet ist und wobei die erste Flachseite (12) im vom Laserstrahlungsfeld (20) durchsetzten Bereich frei von durch eine in sich mechanisch starre Fläche vorgegebenen Zwangskräften ist, eine Kühleinrichtung (50), in welcher ein das Schichtsystem (26, 64, 94) auf einer der ersten Flachseite (12) gegenüberliegenden Seite (70, 94) unmittelbar beaufschlagendes Kühlmedium (56) geführt ist, welches aus dem Festkörper (10) über das Schichtsystem (26, 64, 94) und die erste Flachseite (12) Wärme aufnimmt.

2. Laserverstärkersystem nach Anspruch 1, **dadurch gekennzeichnet, dass** der Festkörper (10) an dem Träger (40) fixiert ist.

3. Laserverstärkersystem nach Anspruch 2, **dadurch gekennzeichnet, dass** der Festkörper (10) an dem Träger (40) durch eine zwischen der Trägerfläche (42) und der zweiten Flachseite (14) wirksame Verbindung fixiert ist.

4. Laserverstärkersystem nach Anspruch 3, **dadurch gekennzeichnet, dass** die Verbindung zwischen der Trägerfläche (42) und der zweiten Flachseite (14) durch Bonden von Träger (40) und Festkörper (10) entstanden ist.

5. Laserverstärkersystem nach Anspruch 3, **dadurch gekennzeichnet, dass** die Verbindung zwischen der Trägerfläche (42) und der zweiten Flachseite (14) durch eine Halteschicht (80) erfolgt.

6. Laserverstärkersystem nach Anspruch 5, **dadurch gekennzeichnet, dass** die Halteschicht (80) hinsichtlich ihres Brechungsindex ($n_{80}$) an den Brechungsindex ($n_{10}$) des Festkörpers (10) angepasst ist.

7. Laserverstärkersystem nach Anspruch 6, **dadurch gekennzeichnet, dass** zwischen der Halteschicht (80) und dem Träger (40) und/oder der Halteschicht (80) und dem Festkörper (10) jeweils ein Brechungsindexunterschied ($n_{80} - n_{40}$, $n_{80} - n_{10}$) von weniger als $10^{-2}$ besteht.

8. Laserverstärkersystem nach einem der Ansprüche 5 bis 7, **dadurch gekennzeichnet, dass** zwischen der Halteschicht (80) und dem Träger (40) eine Antireflexschicht (82) vorgesehen ist.

9. Laserverstärkersystem nach einem der Ansprüche 5 bis 8, **dadurch gekennzeichnet, dass** zwischen der Halteschicht (80) und dem Festkörper (10) eine Antireflexschicht (84) vorgesehen ist.

10. Laserverstärkersystem nach einem der Ansprüche 1 oder 2, **dadurch gekennzeichnet, dass** der Festkörper (10) und der Träger (40) im Bereich der Trägerfläche (42) und der zweiten Flachseite (14) kraftschlüssig durch Druckbeaufschlagung des Festkörpers in Richtung des Trägers fixiert sind.

11. Laserverstärkersystem nach Anspruch 10, **dadurch gekennzeichnet, dass** der Festkörper (10) durch das Kühlmedium (56) in Richtung (86) des Trägers (42) kraftbeaufschlagt ist.

12. Laserverstärkersystem nach Anspruch 10 oder 11, **dadurch gekennzeichnet, dass** der Festkörper (10) in Teilbereichen (96) in Richtung des Trägers (40) kraftbeaufschlagt ist.

13. Laserverstärkersystem nach einem der Ansprüche 10 bis 12, **dadurch gekennzeichnet, dass** der Festkörper (10) in einem außerhalb des Laserstrahlungsfeldes (20) liegenden äußeren Bereich (96) in Richtung des Trägers (40) kraftbeaufschlagt ist.

14. Laserverstärkersystem nach einem der Ansprüche 10 bis 13, **dadurch gekennzeichnet, dass** der Festkörper (10) mit dem an das vom Laserstrahlungsfeld (20) durchsetzte Teilvolumen (22) angrenzenden Bereich der zweiten Flachseite (14) in jedem Punkt mit im wesentlichen derselben Kraft auf den Träger (40) wirkt.

15. Laserverstärkersystem nach einem der Ansprüche 10 bis 14, **dadurch gekennzeichnet, dass** der mit der zweiten Flachseite (14) an der Trägerfläche (42) anliegende Festkörper (10) zumindest mit dem an den vom Laserstrahlungsfeld (20) durchsetzten Teilvolumen (22) angrenzenden Bereich der zweiten Trägerfläche (42) aufgrund innerer Vorspannung auf den Träger (40) wirkt.

16. Laserverstärkersystem nach Anspruch 15, **dadurch gekennzeichnet, dass** die zweite Flachseite (14) vor dem Anlegen derselben an der Trägerfläche (42) eine konvexe Wölbung aufweist.

17. Laserverstärkersystem nach einem der voranstehenden Ansprüche, **dadurch gekennzeichnet, dass** in den von dem Laserstrahlungsfeld (20) durchsetzten Bereichen der ersten und zweiten Flachseite (12, 14) die Temperatur an der zweiten Flachseite (14) höher ist als an der ersten Flachseite (12).

18. Laserverstärkersystem nach einem der voranstehenden Ansprüche, **dadurch gekennzeichnet, dass** der Festkörper in dem vom Laserstrahlungsfeld (20) durchsetzten Volumenbereich (22) einen im wesentlichen ausschließlich quer zu den Flachseiten (12, 14) verlaufenden Temperaturgradient aufweist.

**19.** Laserverstärkersystem nach einem der voranstehenden Ansprüche, **dadurch gekennzeichnet, dass** der Festkörper (10) in dem vom Laserstrahlungsfeld (20) durchsetzten Volumenbereich (22) in Richtung einer Flächenausdehnung der Flachseiten (12, 14) im wesentlichen temperaturgradientenfrei ist.

**20.** Laserverstärkersystem nach einem der voranstehenden Ansprüche, **dadurch gekennzeichnet, dass** in dem Festkörper (10) in einer sich quer zu den Flachseiten (12, 14) erstreckenden und von der zweiten Flachseite (14) zur ersten Flachseite (12) verlaufenden Richtung ein insgesamt negativer Temperaturgradient auftritt.

**21.** Laserverstärkersystem nach einem der voranstehenden Ansprüche, **dadurch gekennzeichnet, dass** die Ableitung der Wärme aus dem Festkörper (10) über ein mindestens eine auf den Festkörper (10) aufgetragene Schicht (26) umfassendes Schichtsystem (26, 64, 94) erfolgt.

**22.** Laserverstärkersystem nach einem der voranstehenden Ansprüche, **dadurch gekennzeichnet, dass** die Abfuhr von Wärme aus dem Festkörper (10) zu dem fluiden Kühlmedium ausschließlich über Schichten (26, 64, 94) aus formflexiblen Materialien erfolgt.

**23.** Laserverstärkersystem nach einem der Ansprüche 21 oder 22, **dadurch gekennzeichnet, dass** die Schichten (26, 64, 94), über welche die Abfuhr von Wärme aus dem Festkörper (10) zum fluiden Kühlmedium (56) erfolgt, insgesamt einen Wärmewiderstand von höchstens $8 \; \dfrac{K \; mm^2}{W}$ aufweisen.

**24.** Laserverstärkersystem nach einem der Ansprüche 21 bis 23, **dadurch gekennzeichnet, dass** die Wärmeabfuhr durch die Kühleinrichtung (50) über eine von einer Reflektorschicht (26) getragene Deckschicht (64) erfolgt, welche auf einer dem Festkörper (10) abgewandten Seite (70) von dem fluiden Kühlmedium (56) beaufschlagt ist.

**25.** Laserverstärkersystem nach Anspruch 24, **dadurch gekennzeichnet, dass** die Deckschicht (64) eine Schutzschicht für die Reflektorschicht (26) gegen Einwirkung des Kühlmediums (56) darstellt.

**26.** Laserverstärkersystem nach Anspruch 24 oder 25, **dadurch gekennzeichnet, dass** über die Deckschicht (64) keine formdefinierende Einwirkung auf den Festkörper (10) erfolgt.

**27.** Laserverstärkersystem nach Anspruch 24 oder 26, **dadurch gekennzeichnet, dass** die Deckschicht (64) als flexible Schicht ausgebildet ist.

**28.** Laserverstärkersystem nach einem der Ansprüche 24 bis 27, **dadurch gekennzeichnet, dass** die Deckschicht (64) als sich an die Form des Festkörpers (10) formadaptierende Schicht ausgebildet ist.

**29.** Laserverstärkersystem nach einem der Ansprüche 21 bis 24, **dadurch gekennzeichnet, dass** das Schichtsystem (26, 64, 94) eine Membran (94) umfasst, welche auf ihrer dem Festkörper (10) abgewandten Seite von dem fluiden Kühlmedium (56) beaufschlagt ist.

**30.** Laserverstärkersystem nach einem der voranstehenden Ansprüche, **dadurch gekennzeichnet, dass** der Festkörper (10) mit dem Schichtsystem (26, 64, 94) eine das Kühlmedium (56) führende Kühlkammer (54) begrenzt.

**31.** Laserverstärkersystem nach Anspruch 30, **dadurch gekennzeichnet, dass** die Kühlkammer (54) für das Kühlmedium (56) in einem Haltergehäuse (52) angeordnet ist.

**32.** Laserverstärkersystem nach Anspruch 31, **dadurch gekennzeichnet, dass** der Träger (40) mit dem Festkörper (10) eine Öffnung (60) im Haltergehäuse (52) verschließt.

**33.** Laserverstärkersystem nach einem der voranstehenden Ansprüche, **dadurch gekennzeichnet, dass** der Träger (40) aus einem Material mit einer Wärmeleitfähigkeit kleiner $2 \; \dfrac{W}{m \cdot K}$ ausgebildet ist.

**34.** Laserverstärkersystem nach einem der voranstehenden Ansprüche, **dadurch gekennzeichnet, dass** der Träger (40) aus einem athermalen optischen Material gebildet ist.

**35.** Laserverstärkersystem nach einem der voranstehenden Ansprüche, **dadurch gekennzeichnet, dass** der Träger (40) gegenüber der Kühleinrichtung (50) thermisch isoliert ist.

**36.** Laserverstärkersystem nach einem der voranstehenden Ansprüche, **dadurch gekennzeichnet, dass** der Träger (40) und der Festkörper (10) ähnliche kristallgitterbildende Materialien aufweisen.

**37.** Laserverstärkersystem nach einem der voranstehenden Ansprüche, **dadurch gekennzeichnet, dass** die Flachseiten (12, 14) des Festkörpers (10) planparallel poliert sind.

**38.** Laserverstärkersystem nach einem der Ansprüche 1 bis 36, **dadurch gekennzeichnet, dass** der Träger (40) und der Festkörper (10) im Bereich der zweiten Flachseite (14) und der Trägerfläche (42) miteinander verbunden sind und die erste Flachseite (12) und eine der Trägerfläche (42) gegenüberliegende Frontfläche des Trägers (40) planparallel zueinander poliert sind.

**Claims**

**1.** Laser amplifying system comprising

a solid-state member (10) of a plate-like design, said solid-state member having flat sides (12, 14) located opposite one another and comprising a laser-active material,
a layer system (26, 64, 94) arranged on a first flat side (12) and comprising a reflector layer (26) for the laser radiation field (20) and a cover layer (64) arranged on the reflector layer (26),
a laser radiation field (20) passing through the solid-state member (10),
a pumping radiation field (32) pumping the laser-active material,
a support (40) with a stable shape for the solid-state member (10), said support having the laser radiation field (20) passing through it and being transparent for said field, wherein the solid-state member (10) is supported areally on a support surface (42) of the support (40) with a stable shape with its second flat side (14), is arranged so as to be defined in its shape and position via the support surface (42) interacting essentially only with the second flat side (14) and wherein the first flat side (12) in the area penetrated by the laser radiation field (20) is free from constraining forces predetermined by a surface inherently mechanically rigid,
a cooling device (50), a cooling medium (56) acting directly on the layer system (26, 64, 94) on a side (70, 94) located opposite the first flat side (12) being guided in said cooling device, said cooling medium absorbing heat from the solid-state member (10) via the layer system (26, 64, 94) and the first fiat side (12).

**2.** Laser amplifying system as defined in claim 1, **characterized in that** the solid-state member (10) is fixed on the support (40).

**3.** Laser amplifying system as defined in claim 2, **char-**acterized in that the solid-state member (10) is fixed on the support (40) by a connection effective between the support surface (42) and the second flat side (14).

**4.** Laser amplifying system as defined in claim 3, **characterized in that** the connection between the support surface (42) and the second flat side (14) has resulted due to bonding of support (40) and solid-state member (10).

**5.** Laser amplifying system as defined in claim 3, **characterized in that** the connection between the support surface (42) and the second flat side (14) is brought about by means of a holding layer (80).

**6.** Laser amplifying system as defined in claim 5, **characterized in that** the holding layer (80) is adapted with respect to its index of refraction ($n_{80}$) to the index of refraction ($n_{10}$) of the solid-state member (10).

**7.** Laser amplifying system as defined in claim 6, **characterized in that** a difference in the respective index of refraction ($n_{80} - n_{40}$, $n_{80} - n_{10}$) of less than $10^{-2}$ exists between the holding layer (80) and the support (40) and/or the holding layer (80) and the solid-state member (10).

**8.** Laser amplifying system as defined in any one of claims 5 to 7, **characterized in that** an antireflection layer (82) is provided between the holding layer (80) and the support (40).

**9.** Laser amplifying system as defined in any one of claims 5 to 8, **characterized in that** an antireflection layer (84) is provided between the holding layer (80) and the solid-state member (10).

**10.** Laser amplifying system as defined in one of claims 1 or 2, **characterized in that** the solid-state member (10) and the support (40) are fixed in a force-locking manner in the area of the support surface (42) and the second flat side (14) as a result of a pressure acting on the solid-state member in the direction of the support.

**11.** Laser amplifying system as defined in claim 10, **characterized in that** the solid-state member (10) is acted upon with a force in the direction (86) of the support (42) by way of the cooling medium (56).

**12.** Laser amplifying system as defined in claim 10 or 11, **characterized in that** the solid-state member (10) is acted upon with a force in the direction of the support (40) in sections (96).

**13.** Laser amplifying system as defined in any one of claims 10 to 12, **characterized in that** the solid-state member (10) is acted upon with a force in the direction of the support (40) in an outer area (96) located outside the laser radiation field (20).

14. Laser amplifying system as defined in any one of claims 10 to 13, **characterized in that** the solid-state member (10) acts on the support (40) with essentially the same force at every point with the area of the second flat side (14) bordering on the partial volume (22) penetrated by the laser radiation field (20).

15. Laser amplifying system as defined in any one of claims 10 to 14, **characterized in that** the solid state member (10) abutting on the support surface (42) with the second flat side (14) acts on the support (40) at least with the area of the second support surface (42) bordering on the partial volume (22) penetrated by the laser radiation field (20) on account of inner tension.

16. Laser amplifying system as defined in claim 15, **characterized in that** the second flat side (14) has a convex curvature prior to it abutting on the support surface (42).

17. Laser amplifying system as defined in any one of the preceding claims, **characterized in that** the temperature at the second flat side (14) is higher than at the first flat side (12) in the areas of the first and second flat sides (12, 14) penetrated by the laser radiation field (20).

18. Laser amplifying system as defined in any one of the preceding claims, **characterized in that** the solid-state member has a temperature gradient extending essentially exclusively transversely to the flat sides (12, 14) in the volume area (22) penetrated by the laser radiation field (20).

19. Laser amplifying system as defined in any one of the preceding claims, **characterized in that** in the volume area (22) penetrated by the laser radiation field (20) the solid-state member (10) is essentially free from any temperature gradient in the direction of a surface extension of the flat sides (12, 14).

20. Laser amplifying system as defined in any one of the preceding claims, **characterized in that** an altogether negative temperature gradient occurs in the solid-state member (10) in a direction extending transversely to the flat sides (12, 14) and extending from the second flat side (14) to the first flat side (12).

21. Laser amplifying system as defined in any one of the preceding claims, **characterized in that** the discharge of heat from the solid-state member (10) takes place via a layer system (26, 64, 94) comprising at least one layer (26) applied to the solid-state member (10).

22. Laser amplifying system as defined in any one of the preceding claims, **characterized in that** the discharge of heat from the solid-state member (10) to the fluid cooling medium takes place exclusively via layers (26, 64, 94) consisting of dimensionally flexible materials.

23. Laser amplifying system as defined in one of claims 21 or 22, **characterized in that** the layers (26, 64, 94), via which the discharge of heat from the solid-state member (10) to the fluid cooling medium (56) takes place, have altogether a heat resistance of at

the most $8 \dfrac{K\ mm^2}{W}$.

24. Laser amplifying system as defined in any one of claims 21 to 23, **characterized in that** the heat discharge is brought about by the cooling device (50) via a cover layer (64) borne by a reflector layer (26), said cover layer being acted upon by the fluid cooling medium (56) on a side (70) facing away from the solid-state member (10).

25. Laser amplifying system as defined in claim 24, **characterized in that** the cover layer (64) represents a protective layer for the reflector layer (26) against action of the cooling medium (56).

26. Laser amplifying system as defined in claim 24 or 25, **characterized in that** no shape-defining action on the solid-state member (10) takes place via the cover layer (64).

27. Laser amplifying system as defined in claim 24 or 26, **characterized in that** the cover layer (64) is designed as a flexible layer.

28. Laser amplifying system as defined in any one of claims 24 to 27, **characterized in that** the cover layer (64) is designed as a layer adapting in shape to the shape of the solid-state member (10).

29. Laser amplifying system as defined in any one of claims 21 to 24, **characterized in that** the layer system (26, 64, 94) comprises a membrane (94) acted upon by the fluid cooling medium (56) on its side facing away from the solid-state member (10).

30. Laser amplifying system as defined in any one of the preceding claims, **characterized in that** with the layer system (26, 64, 94) the solid-state member (10) limits a cooling chamber (54) guiding the cooling medium (56).

**31.** Laser amplifying system as defined in claim 30, **characterized in that** the cooling chamber (54) for the cooling medium (56) is arranged in a holder housing (52).

**32.** Laser amplifying system as defined in claim 31, **characterized in that** the support (40) closes an opening (60) in the holder housing (52) with the solid-state member (10).

**33.** Laser amplifying system as defined in any one of the preceding claims, **characterized in that** the support (40) is formed from a material with a heat conductivity of less than $2 \dfrac{W}{m \ x \ K}$.

**34.** Laser amplifying system as defined in any one of the preceding claims, **characterized in that** the support (40) is formed from an athermal optical material.

**35.** Laser amplifying system as defined in any one of the preceding claims, **characterized in that** the support (40) is insulated thermally in relation to the cooling device (50).

**36.** Laser amplifying system as defined in any one of the preceding claims, **characterized in that** the support (40) and the solid-state member (10) have similar materials forming a crystal grating.

**37.** Laser amplifying system as defined in any one of the preceding claims, **characterized in that** the flat sides (12, 14) of the solid-state member (10) are polished so as to be plane-parallel.

**38.** Laser amplifying system as defined in any one of claims 1 to 36, **characterized in that** the support (40) and the solid-state member (10) are connected to one another in the area of the second flat side (14) and the support surface (42) and the first flat side (12) and a front face of the support (40) located opposite the support surface (42) are polished so as to be plane-parallel to one another.

**Revendications**

**1.** Système d'amplificateur laser comprenant :

- un corps solide (10) configuré en forme de plaque et présentant des côtés plats (12, 14) à côtés opposés, corps solide qui comprend un matériau actif pour l'effet laser,
- un système de couches (26, 64, 94) disposé sur un premier côté plat (12), ledit système de couches comprenant une couche de réflecteur (26) pour le champ de rayonnement laser (20) et une couche de recouvrement (64) disposée sur la couche de réflecteur (26),
- un champ de rayonnement laser (20) traversant le corps solide (10),
- un champ de rayonnement de pompage (32) pompant le matériau actif pour l'effet laser,
- un support (40) pour le corps solide (10), ledit support étant traversé par le champ de rayonnement laser (20) et étant transparent pour celui-ci et indéformable, où le corps solide (10) est, par son deuxième côté plat (14), supporté de façon plane sur une surface (42) du support indéformable (40), ledit corps solide étant disposé de manière définie dans sa forme et de manière définie dans sa position, par la surface (42) du support (40) coopérant essentiellement seulement, avec le deuxième côté plat (14), et où le premier côté plat (12) est, dans la zone traversée par le champ de rayonnement laser (20), exempt de forces de liaison prédéfinies par une surface en soi mécaniquement rigide,
- un dispositif de refroidissement (50) dans lequel un milieu de refroidissement (56) alimentant directement le système de couches (26, 64, 94), sur un côté (70, 94) faisant face au premier côté plat (12), milieu de refroidissement qui absorbe de la chaleur provenant du corps solide (10), via le système de couches (26, 64, 94) et via le premier côté plat (12).

**2.** Système d'amplificateur laser selon la revendication 1, **caractérisé en ce que** le corps solide (10) est fixé sur le support (40).

**3.** Système d'amplificateur laser selon la revendication 2, **caractérisé en ce que** le corps solide (10) est fixé sur le support (40), par un assemblage efficace réalisé entre la surface (42) du support et le deuxième côté plat (14).

**4.** Système d'amplificateur laser selon la revendication 3, **caractérisé en ce que** l'assemblage entre la surface (42) du support et le deuxième côté plat (14) est réalisé par métallisation du support (40) et du corps solide (10).

**5.** Système d'amplificateur laser selon la revendication 3, **caractérisé en ce que** l'assemblage entre la surface (42) du support et le deuxième côté plat (14) est réalisé par une couche de retenue (80).

**6.** Système d'amplificateur laser selon la revendication 5, **caractérisé en ce que** la couche de retenue (80) est, concernant son indice de réfraction ($n_{80}$), adaptée à l'indice de réfraction ($n_{10}$) du corps solide (10).

**7.** Système d'amplificateur laser selon la revendication 6, **caractérisé en ce qu'**il existe, respectivement, entre la couche de retenue (80) et le support (40) et / ou la couche de retenue (80) et le corps solide (10), une différence d'indice de réfraction ($n_{80}$ - $n_{40}$, $n_{80}$ - $n_{10}$) inférieure à $10^{-2}$.

8. Système d'amplificateur laser selon l'une quelconque des revendications 5 à 7, **caractérisé en ce qu'**il est prévu une couche antireflet (82) entre la couche de retenue (80) et le support (40).

9. système d'amplificateur laser selon l'une quelconque des revendications 5 à 8, **caractérisé en ce qu'**il est prévu une couche antireflet (84) entre la couche de retenue (80) et le corps solide (10).

10. Système d'amplificateur laser selon l'une ou l'autre des revendications 1 et 2, **caractérisé en ce que** le corps solide (10) et le support (40), dans la zone de la surface (42) du support et du deuxième côté plat (14), sont fixés par action de force, sous l'effet de la sollicitation en pression du corps solide, en direction du support.

11. Système d'amplificateur laser selon la revendication 10, **caractérisé en ce que** le corps solide (10) est sollicité par la force, sous l'effet du milieu de refroidissement (56), en direction (86) du support (40).

12. Système d'amplificateur laser selon la revendication 10 ou 11, **caractérisé en ce que** le corps solide (10) est sollicité par la force, dans des zones partielles (96), en direction du support (40).

13. Système d'amplificateur laser selon l'une quelconque des revendications 10 à 12, **caractérisé en ce que** le corps solide (10) est sollicité par la force dans une zone extérieure (96), en direction du support (40), ladite zone extérieure se trouvant à l'extérieur du champ de rayonnement laser (20).

14. Système d'amplificateur laser selon l'une quelconque des revendications 10 à 13, **caractérisé en ce que** le corps solide (10), par la zone du deuxième côté plat (14) contiguë au volume partiel (22) traversé par le champ de rayonnement laser (20), agit sur le support (40), au niveau de chaque point, avec pratiquement la même force.

15. Système d'amplificateur laser selon l'une quelconque des revendications 10 à 14, **caractérisé en ce que** le corps solide (10) s'appuyant sur la surface (42) du support, par le deuxième côté plat (14), agit sur le support (40) en raison d'une tension intérieure, au moins avec la zone de la deuxième surface (42) du support, contiguë au volume partiel (22) traversé par le champ de rayonnement laser (20).

16. Système d'amplificateur laser selon la revendication 15, **caractérisé en ce que** le deuxième côté plat (14) présente une courbure convexe, avant son application sur la surface (42) du support.

17. Système d'amplificateur laser selon l'une quelconque des revendications précédentes, **caractérisé en ce que**, dans les zones des premier et deuxième côtés plats (12, 14), traversées par le champ de rayonnement laser (20), la température au niveau du deuxième côté plat (14) est supérieure à celle au niveau du premier côté plat (12).

18. Système d'amplificateur laser selon l'une quelconque des revendications précédentes, **caractérisé en ce que** le corps solide, dans la zone de volume (22) traversée par le champ de rayonnement laser (20), présente un gradient de température s'étendant pratiquement, de façon exclusive, transversalement par rapport aux côtés plats (12, 14).

19. Système d'amplificateur laser selon l'une quelconque des revendications précédentes, **caractérisé en ce que** le corps solide (10), dans la zone de volume (22) traversée par le champ de rayonnement laser (20), est pratiquement exempt de gradient de température en direction d'une extension de surface des côtés plats (12, 14).

20. Système d'amplificateur laser selon l'une quelconque des revendications précédentes, **caractérisé en ce que**, dans le corps solide (10), dans une direction s'étendant de façon transversale par rapport aux côtés plats (12, 14) et s'étendant depuis le deuxième côté plat (14) jusqu'au premier côté plat (12), il se produit un gradient de température, dans l'ensemble négatif.

21. Système d'amplificateur laser selon l'une quelconque des revendications précédentes, **caractérisé en ce que** l'évacuation de la chaleur, provenant du corps solide (10), se produit via un système de couches (26, 64, 94) comprenant au moins une couche (26) appliquée sur le corps solide (10).

22. Système d'amplificateur laser selon l'une quelconque des revendications précédentes, **caractérisé en ce que** l'évacuation de chaleur, du corps solide (10) vers le milieu de refroidissement fluide, se produit exclusivement via des couches (26, 64, 94) réalisées dans des matériaux déformables.

23. Système d'amplificateur laser selon l'une ou l'autre des revendications 21 et 22, **caractérisé en ce que** les couches (26, 64, 94), par lesquelles se produit l'évacuation de chaleur, du corps solide (10) vers le milieu de refroidissement fluide (56), présentent au total une résistance thermique au maximum de

$$8 \; \frac{K \; mm^2}{W} \; .$$

24. Système d'amplificateur laser selon l'une quelconque des revendications 21 à 23, **caractérisé en ce que** l'évacuation de chaleur est réalisée par le dispositif de refroidissement (50), via une couche de recouvrement (64) supportée par une couche de réflecteur (26), laquelle couche de recouvrement, sur un côté (70) placé à l'opposé du corps solide (10), est alimentée par le milieu de refroidissement fluide (56).

25. Système d'amplificateur laser selon la revendication 24, **caractérisé en ce que** la couche de recouvrement (64) représente une couche de protection pour la couche de réflecteur (26), contre l'effet du milieu de refroidissement (56).

26. Système d'amplificateur laser selon la revendication 24 ou 25, **caractérisé en ce qu'**il ne se produit sur le corps solide (10), via la couche de recouvrement (64), aucun effet définissant une forme.

27. Système d'amplificateur laser selon la revendication 24 ou 26, **caractérisé en ce que** la couche de recouvrement (64) est configurée comme une couche flexible.

28. Système d'amplificateur laser selon l'une quelconque des revendications 24 à 27, **caractérisé en ce que** la couche de recouvrement (64) est configurée comme une couche s'adaptant à la forme du corps solide (10).

29. Système d'amplificateur laser selon l'une quelconque des revendications 21 à 24, **caractérisé en ce que** le système de couches (26, 64, 94) comprend une membrane (94) qui, sur son côté placé à l'opposé du corps solide (10), est alimentée par le milieu de refroidissement fluide (56).

30. Système d'amplificateur laser selon l'une quelconque des revendications précédentes, **caractérisé en ce que** le corps solide (10), avec le système de couches (26, 64, 94), délimite une chambre de refroidissement (54) fournissant le milieu de refroidissement (56).

31. Système d'amplificateur laser selon la revendication 30, **caractérisé en ce que** la chambre de refroidissement (54), prévue pour le milieu de refroidissement (56), est disposée dans un carter de retenue (52).

32. Système d'amplificateur laser selon la revendication 31, **caractérisé en ce que** le support (40), avec le corps solide (10), obture une ouverture (60) dans le carter de retenue (52).

33. Système d'amplificateur laser selon l'une quelconque des revendications précédentes, **caractérisé en ce que** le support (40) est réalisé dans un matériau ayant une conductivité thermique inférieure à

$$2 \; \frac{W}{m \; \cdot \; K} \; .$$

34. Système d'amplificateur laser selon l'une quelconque des revendications précédentes, **caractérisé en ce que** le support (40) est formé par un matériau athermique et optique.

35. Système d'amplificateur laser selon l'une quelconque des revendications précédentes, **caractérisé en ce que** le support (40) est isolé thermiquement par rapport au dispositif de refroidissement (50).

36. Système d'amplificateur laser selon l'une quelconque des revendications précédentes, **caractérisé en ce que** le support (40) et le corps solide (10) présentent des matériaux semblables formant des réseaux cristallins.

37. Système d'amplificateur laser selon l'une quelconque des revendications précédentes, **caractérisé en ce que** les côtés plats (12, 14) du corps solide (10) sont polis sur les faces planes et parallèles.

38. Système d'amplificateur laser selon l'une quelconque des revendications 1 à 36, **caractérisé en ce que** le support (40) et le corps solide (10) sont assemblés l'un à l'autre dans la zone du deuxième côté plat (14) et de la surface (42) du support, et le premier côté plat (12) et une surface frontale du support (40), faisant face à la surface (42) du support, sont polis, l'un par rapport à l'autre, sur les faces planes et parallèles.

EP 1 213 801 B1

FIG.1

FIG.2

16

FIG.3

FIG.4

FIG.5

FIG.6

FIG.7

FIG.8

FIG.9

FIG.10

FIG.11